# EUROPEAN PATENT SPECIFICATION

(11) **EP 2 786 171 B1**
(45) Date of publication and mention of the grant of the patent: **21.09.2016**
(21) Application number: 12766374.8
(22) Date of filing: 29.08.2012
(51) Int. Cl.: G01S 7/03, G01F 23/284, G01S 13/40, G01S 13/88

(54) **CONTACTLESS MICROWAVE MEASURING SYSTEM FOR MEASURING THE DISTANCE OF REFLECTIVE SURFACE**
KONTAKTLOSES MIKROWELLENMESSSYSTEM ZUR MESSUNG DES ABSTANDS EINER REFLEKTIERENDEN OBERFLÄCHE
SYSTÈME DE MESURE MICRO-ONDES SANS CONTACT POUR MESURE DE LA DISTANCE DE SURFACE RÉFLÉCHISSANTE

(30) Priority: 01.09.2011 CZ 20110547
(43) Date of publication of application: 08.10.2014
(73) Proprietor: Czech Technical University in Prague - Faculty of Electrical Engineering, 166 27 Praha 6 (CZ)
(72) Inventor: HOFFMANN, Karel, 162 00 Praha 6 (CZ); SKVOR, Zbynek, 120 00 Praha 2 (CZ)
(74) Representative: Duskova, Hana
(86) International application number: PCT/CZ2012/000086
(87) International publication number: WO 2013/029577

(56) References cited:
- CZ-U1- 21 247
- US-A- 5 359 331
- US-A1- 2005 018 170

## Description

### Background of the Invention

Presented solution deals with connection of a measuring system for contactless measuring of the distance of surfaces capable of reflecting electromagnetic waves.

### Description of Prior Art

Precise measuring of short distances exploits the microwave resonance method where the resonator is created from one half of Fabry-Perot resonator, in front of which is placed a reflective surface. Space between the reflective surface and the mirror of the half of Fabry-Perot resonator creates a resonator where the resonance frequency depends on the distance between the reflective surface and the mirror. When resonation occurs, this distance equals to integral multiple of half of the wavelength. If such integral multiple is known, it is possible to use the resonance frequency to derive from it the distance between the reflective surface and the mirror of the resonator, or possibly a change of distance of the reflective surface from its chosen reference distance.

Resonance frequency is determined based on the frequency dependence of the reflection coefficient or transmission coefficient of resonator coupled to one or two microwave lines. At the resonance frequency, the frequency dependence of the amplitudes of the reflection coefficient or transmission features typical resonance curve with more or less sharp peak. Resonance curve amplitude height and its 3 dB bandwidth depend on the size of unloaded quality factor of the resonator Q₀ and on the size of coupling between the resonator and the line or lines respectively. At a given Q₀ the difference of resonance curve amplitude at the resonance frequency is the higher, the closer the resonator is coupled to the supply line. However, the closer the resonator is coupled, the bigger is the 3 dB bandwidth of the resonance curve, and therefore the curve's peak is less sharp.

In automated process, the resonance frequency is calculated based on measured amplitudes of the resonance curve at several frequencies adjacent to the resonance frequency. For such measurements the behaviour of the resonance curve must sufficiently allow to distinguish it from similarly behaving curves caused for example by undesired reflections in the microwave circuit. Resonance curve therefore must have sufficiently high amplitude, i.e. the resonator must be sufficiently tightly coupled. Tight coupling, however, makes the resonance curve's peak less sharp, which compromises accuracy of determining the resonance frequency and therefore also accuracy of determining the measured distance.

For precise measurements of short distances is also used a contactless system with tunable microwave generator. Microwave output of the tunable microwave generator is connected to the input of the splitting element. The first output of the splitting element is the input of the reference channel and is connected to the input of the first attenuator with adjustable attenuation. Output of the first attenuator is connected to the first input of combining element. Second output of the splitting element is the input of the testing channel and is connected to the input of the block of phase change of the signal reflected from the reflective surface in the testing channel with relation to the signal in the reference channel. Isolating output of the block of the signal phase change is connected to the second input of the combining element. Output of the combining element is connected to the input of control and evaluating unit equipped with indicator of microwave power or voltage or current. Its control output is connected to the input of tunable microwave generator. In the testing channel may be inserted the second attenuator with adjustable attenuation and/or the first amplifier with adjustable gain and/or in the reference channel may be inserted the second amplifier with adjustable gain in cascade with the first attenuator with adjustable attenuation.

Analogical connection is such that the contactless microwave measuring system contains tunable microwave generator, which has the microwave output connected to the input of the splitting element. Splitting element has the first output, which is the input of the reference channel, connected to the first input of the combining element. Second output of the splitting element is the input of the testing channel and it is connected to the block of phase change of the signal reflected from the reflective surface in the testing channel with relation to the signal in the reference channel. Isolating output of the block of the signal phase change is connected via the first amplifier with adjustable gain to the second input of the combining element. Output of the combining element is connected to the input of control and evaluating unit equipped with indicator of microwave power or voltage or current. Its control output is connected to the input of tunable microwave generator. In the reference channel may be inserted the first attenuator with adjustable attenuation and/or the second amplifier with adjustable gain and/or in the testing channel may be inserted the second attenuator with adjustable attenuation in cascade with the first amplifier with adjustable gain.

Another modification for both basic designs is that in the reference channel is inserted the first isolator and/or in the testing channel is inserted the second and/or the third isolator before and/or after the block of phase change of the signal reflected from the reflective surface in the testing channel with relation to the signal in the reference channel. All these isolators are oriented in a forward direction towards the combining element.

In one embodiment the block of phase change of the signal reflected from the reflective surface in the testing channel with relation to the signal in the reference channel is formed by a transmitting antenna where its input is the input, and by a receiving antenna where its output is the isolating output. In another embodiment this block of the signal phase change is formed by a directional three-port element where its input is the input, its output is the isolating output. To its coupling output is connected joint antenna for transmitting and receiving. In this case, the directional three-port element may also be implemented using a directional four-port element with its fourth port non-reflectively terminated or a power splitter with isolation between its outputs or a circulator.

In all versions, the splitting and/or combining elements may be formed by the power splitter or directional four-port element with its fourth port non-reflectively terminated.

If the difference of electric lengths of both channels at a given frequency will be equal to odd multiple of half of the wavelength, the signals will sum up in the combining element with opposite phase, thus providing very sharp minimums of voltage indicated e.g. by a detector. When the distance of the reflective surface changes, so will change also the frequency of the relevant voltage minimum, which can be determined by re-tuning the microwave generator. If one knows the odd number of halves of wavelengths, for which the electric lengths of both channel vary, one can determine the reflective surface distance based on the change of frequency corresponding to the voltage minimum.

Common disadvantage of various alternatives of this method is that they contain higher number of microwave elements and their non-ideal parameters degrade favorable characteristics of the method. They include especially reflections at non-ideally matched elements, which subsequently degrade also the isolating properties of directional elements involved. As a result, at the combining element meet not only the desired reference signal and the signal, which passed through the testing channel and carries the information about the measured distance. Both channels bring to the combining element also parasitic signals created by undesired reflections at individual elements of the system, which interfere with both desired signals. The sum of resulting signals creates at a certain frequency also a voltage minimum. Frequency of this minimum, however, is shifted against the correct frequency of the minimum created only by sum of desired reference and testing signals. Therefore, the dependence, in theory linear, between the frequency of the signal minimum and measured distance is disappearing. Thus, accuracy of the frequency measurement is degraded, or the system calibration becomes significantly more labor-consuming.

### Summary of the Invention

Disadvantage described above is removed by contactless system for measuring the distance of reflective surface according to the presented solution, which includes a tunable microwave generator.

The principle of the new solution is that the microwave output of the tunable microwave generator is connected to the input of the directional four-port element. The through-feed output of the directional four-port element is connected to the input of the attenuator with adjustable attenuation, while its output is connected to the short-circuit. Coupling output of the directional four-port element is connected to the input of the distance sensor, which is also its output and is formed for example by transmitting and simultaneously receiving antenna and the reflective surface, the distance of which is measured. Isolating output of the directional four-port element is connected to the input of control and evaluating unit equipped with indicator of microwave power or voltage or current. Its control output is connected to the input of tunable microwave generator.

Analogical connection is such that the through-feed output of the directional four-port element is connected to the distance sensor. Coupling output of the directional four-port element is then connected to the input of the attenuator, which in both alternatives can be with adjustable attenuation. Output of the attenuator is connected to the short-circuit. Isolating output of the directional four-port element is again connected to the input of the control and evaluating unit equipped with indicator of microwave power or voltage or current. Control output of the control and evaluating unit is connected to the input of tunable microwave generator. Routes of the reference and testing channel are in this case swapped in the four-port element.

In one possible embodiment, for both solutions described above, the control and evaluating unit is formed by a detector, the output of which is connected via the A/D converter to the computer, which is connected to the tunable microwave generator.

Another modification for both basic embodiments is that between the tunable microwave generator and the input of the directional four-port element is connected the first isolator oriented in a forward direction towards the directional four-port element and/or between the isolating output of the directional four-port element and the input of the control and evaluating unit is connected the second isolator oriented in a forward direction towards the control and evaluating unit.

Another modification for both basic embodiments is that the distance sensor is formed by a transmission line, in which is located a shiftable discontinuity with high reflection, connected with or directly formed by an object, distance of which is measured. Such object can be for example the level of liquid with high reflection.

In the presented solution the information about measured distance is also determined by frequency, at which the sum of the reference signal and the testing signal creates the voltage minimum. In contrast to the above-mentioned solutions of circuits known so far the required circuit is significantly simplified.

### Overview of Figures in Drawings

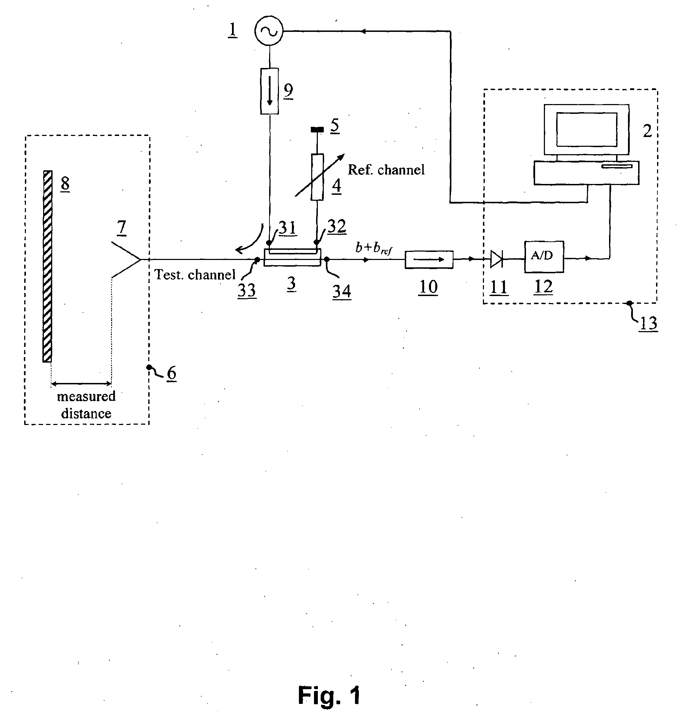

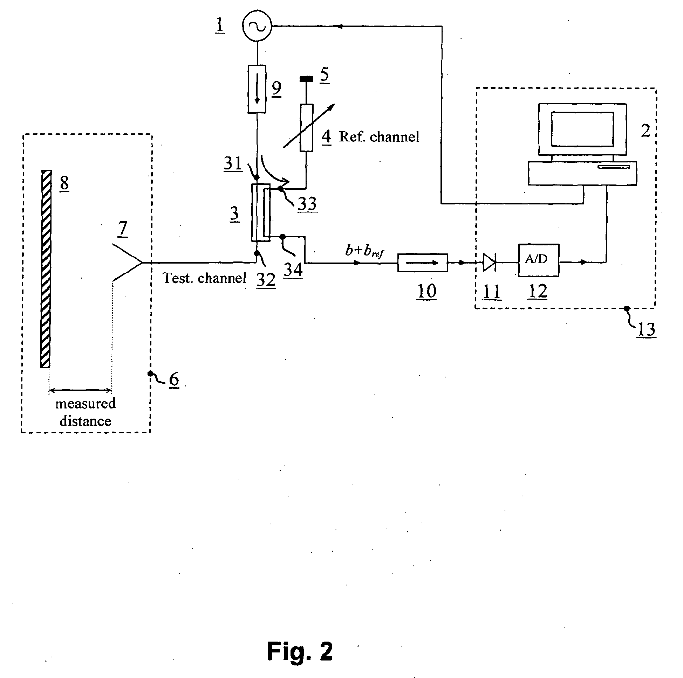

Fig. 1 shows the block diagram of the measuring system. Fig. 2 shows analogical connection of the measuring system, where the connections of the coupling output and the through-feed output of the directional four-port element are swapped.

### Detailed Description of the Preferred Embodiments

One possible example of connection of the contactless microwave measuring system for measuring the distance of reflective surface is shown in fig. 1. Here, the connection is formed by the tunable microwave generator 1, which is preferably synthesized and is in this case controlled by the computer 2. It can also be controlled manually but in practice the computer control will be preferred. Tunable microwave generator 1 is by its microwave output connected to the input 31 of the directional four-port element 3. To the through-feed output 32 of the directional four-port element 3 is connected the attenuator 4, which here is with adjustable attenuation and its output is connected to the short circuit 5 with high reflection, which here is formed by short-circuit. Coupling output 33 of the directional four-port element 3 is connected to the input of the distance sensor 6, which is also its output. Distance sensor 6 is here formed by transmitting and simultaneously receiving antenna 7 and the reflective surface 8, the distance of which is measured. Isolating output 34 of the directional four-port element 3 is connected to the control and evaluating unit 13 equipped with indicator of microwave power or voltage or current. Its control output is connected to the input of tunable microwave generator 1. In described examples the control and evaluating unit 13 is formed by the detector 11, to its output is connected the A/D converter 12, which is connected to the computer 2.

Advantageously, between the tunable microwave generator 1 and the input 31 of the directional four-port element 3 can be inserted the first isolator 9 oriented in a forward direction towards the directional four-port element 3 and/or between the isolating output 34 of the directional four-port element 3 and the input of the control and evaluating unit 13 can be inserted the second isolator 10 oriented in a forward direction towards the control and evaluating unit 13.

Microwave signal in the basic connection design according to the fig. 1 enters from the tunable microwave generator 1 through the input 31 to the directional four-port element 3 where it is split into two parts, which then travel in the reference and testing channels. In the reference channel the signal travels to the through-feed output 32 of the directional four-port element 3, then it goes via the attenuator 4, which in this case has adjustable attenuation, to the short circuit 5 with high reflection, here formed by the short-circuit. From this single-port element 5 the signal reflects and propagates in the reference channel back via the attenuator 4 to the through-feed output 32 of the directional four-port element 3 and exits on the isolating output 34 of the directional four-port element 3 as the signal *b_{ref}*.

In the testing channel the signal travels to the coupling output 33 of the directional four-port element 3 and enters to the distance sensor 6, which here is formed by transmitting and simultaneously receiving antenna 7. The signal is transmitted by the antenna 7 and propagates to the reflective surface 8, the distance of which is measured. From the reflective surface 8 the signal reflects, its phase in the testing channel keeps carrying the information about the reflective surface distance, it enters to the antenna 7 and travels on to the coupling output 33 of the directional four-port element 3 and exits on the isolating output 34 of the directional four-port element 3 as the signal b.

Summary signal *b_{ref}*+*b* travels from the isolating output 34 of the directional four-port element 3 via optionally inserted isolator 10 to the detector 11 and then to the A/D converter 12. Attenuator 4 with adjustable attenuation allows to adjust the amplitude of the signal *b_{ref}* to be identical with the amplitude of the signal *b*. Depending on the distance of the reflective surface 8 and therefore also on the difference of electric lengths of the reference and testing channels at some frequencies both signals are summed in-phase and at others in opposite phase. The signals are summed up in-phase in case when the difference of the electric lengths of both channels at a given frequency will be the even multiple of half of the wavelength. If the difference of the electric lengths of both channels at a given frequency will be equal to the odd multiple of half of the wavelength, the signals will be summed up in the opposite phase, and will thus provide very sharp voltage minimums indicated e.g. by the detector. Voltage indicated by the detector 11 is in its minimum theoretically zero, in practice it is limited by noise of the detector 11. Difference of frequencies, at which individual minimums occur, allows to determine relevant odd multiple of halves of the wavelength corresponding to the difference of the electric lengths of both channels. If the electric length of the reference channel is known, the distance of the reflective surface 8 can be uniquely determined.

Digital information corresponding to rectified summary signal *b_{ref}*+*b* is processed by the computer 2. In automated process, the computer 2 keeps re-tuning the microwave generator 1 and determines frequencies relating to selected voltage minimums, based on which the distance of the reflective surface 8 is determined.

The first isolator 9 and the second isolator 10 are not necessary for the function of the microwave measuring system. Nevertheless, their implementation reduces impact of reflections from not ideally matched impedances of components, especially the generator and detector, and therefore it enhances usable frequency bandwidth and subsequently also the measurement range.

In analogical embodiment according to fig. 2 the connections of the through-feed output 32 and the coupling output 33 of the directional four-port element 3 are swapped. Here, to the through-feed output 32 is connected the distance sensor 6 and to the coupling output 33 is connected the attenuator 4.

Microwave signal in this analogical connection according to fig. 2 enters from the tunable microwave generator 1 through the input 31 to the directional four-port element 3 where it splits into two parts, which then travel in the reference and testing channels. In the reference channel the signal travels to the coupling output 33 of the directional four-port element 3, then it goes through the attenuator 4, which in this case has adjustable attenuation, to the single-port short circuit 5 here formed by short-circuit. From this single-port element 5 the signal reflects and propagates in the reference channel back via the attenuator 4 to the coupling output 33 of the directional four-port element 3 and exits at the isolating output 34 of the directional four-port element 3 as the signal *b_{ref}.*

In the testing channel the signal travels to the through-feed output 32 of the directional four-port element 3 and enters to the distance sensor 6, which is here formed by transmitting and simultaneously receiving antenna 7. The antenna 7 transmits the signal and it propagates to the reflective surface 8, the distance of which is measured. From the reflective surface 8 the signal reflects, its phase in the testing channel keeps carrying the information about the reflective surface distance, it enters to the antenna 7 and travels on to the through-feed output 32 of the directional four-port element 3 and exits on the isolating output 34 of the directional four-port element 3 as the signal b.

Function of the remaining part of the circuit is identical with the connection according to fig. 1.

Another possible alternative of both embodiments mentioned above is that the distance sensor 6 is formed by a transmission line, in which is located a shiftable discontinuity with high reflection, connected with the reflective surface 8, or such discontinuity is directly formed by this reflective surface 8. If the transmission line, e.g. a waveguide, is placed vertically and partially submerged in the liquid, it is possible to measure the height of its level.

Characteristics of the measuring system were tested experimentally. Using a waveguide-type of the measuring system the height of water level was measured. At the frequency 9.2 GHz, when the water level changed by 0.1 mm, the frequency of the voltage minimum changed by 3.9 MHz. Dynamic range between the voltage minimum and maximum in this case exceeded 60 dB.

### Industrial Applicability

Connection for contactless measuring of distances and related new method of determining a distance can be industrially exploited anywhere where it is necessary to measure contactlessly and with high precision distances of surfaces, which are reflective in the microwave range of spectrum. Applications may include for instance thin foils rolling, precise measuring of liquids levels heights, etc.

## Claims

1. Contactless microwave measuring system for measuring the distance of reflective surface containing tunable microwave generator (1) whereby its microwave output is connected to the input (31) of the directional four-gate element (3) where its through-feed output (32) is connected to the input of the attenuator (4), the output of which is connected to the short circuit (5), while coupling output (33) of the directional four-gate element (3) is connected to the input of the distance sensor (6), which is also its output, and the isolating output (34) of the directional four-gate element (3) is connected to the input of the control and evaluating unit (13) equipped with indicator of microwave power or voltage or current, while its control output is connected to the input of tunable microwave generator (1).

2. Contactless microwave measuring system according to claim 1 whereby between the tunable microwave generator (1) and the input (31) of the directional four-gate element (3) is connected the first isolator (9) oriented in a forward direction towards the directional four-gate element (3) and/or between the isolating output (34) of the directional four-gate element (3) and the input of the control and evaluating unit (13) is connected the second isolator (10) oriented in a forward direction towards the control and evaluating unit (13).

3. Contactless microwave measuring system according to claims 1 or 2 whereby the distance sensor (6) is formed by a transmission line, in which is located a shiftable discontinuity with high reflection connected with the reflective surface (8) or directly formed by this reflective surface (8).

4. Contactless microwave measuring system according to claim 1 and any of claims 2 or 3 whereby the attenuator (4) is adjustable.

5. Contactless microwave measuring system for measuring the distance of reflective surface ontaining tunable microwave generator (1) whereby its microwave output is connected to the input (31) of the directional four-gate element (3) where its through-feed output (32) is connected to the input of the distance sensor (6), which is also its output, and its coupling output (33) is connected to the input of the attenuator (4), the output of which is connected to the short circuit (5) and its isolating output (34) is connected to the input of the control and evaluating unit (13) equipped with indicator of microwave power or voltage or current, while its control output is connected to the input of tunable microwave generator (1).

6. Contactless microwave measuring system according to claim 5 whereby between the tunable microwave generator (1) and the input (31) of the directional four-gate element (3) is connected the first isolator (9) oriented in a forward direction towards the directional four-gate element (3) and/or between the isolating output (34) of the directional four-gate element (3) and the input of the control and evaluating unit (13) is connected the second isolator (10) oriented in a forward direction towards the control and evaluating unit (13).

7. Contactless microwave measuring system according to claims 5 or 6 whereby the distance sensor (6) is formed by a transmission line, in which is located a shiftable discontinuity with high reflection connected with the reflective surface (8) or directly formed by this reflective surface (8).

8. Contactless microwave measuring system according to claim 5 and any of clams 6 or 7 whereby the attenuator (4) is adjustable.

## Patentansprüche

1. Kontaktloses Mikrowellen-Messgerät des Abstandes einer Reflektionsoberfläche, das einen umstimmbaren Mikrowellen-Generator (1) enthält, **dadurch gekennzeichnet, dass** sein Mikrowellen-Ausgang an den Eingang (31) des Richtungsviertor-Elements (3) angeschlossen ist, dessen Durchführungsausgang (32) an den Eingang des Abschwächers (4) angeschlossen ist, dessen Ausgang an den Kurzschluss (5) angeschlossen ist, der Koppelausgang (33) des Richtungsviertor-Elements (3) ist an den Eingang des Abstandsensors (6) angeschlossen, der gleichzeitig sein Ausgang ist, und der Isolierausgang (34) des Richtungsviertor-Elements (3) ist mit dem Eingang der Steuerungs- und Bewertungseinheit (13) mit der Anzeige der Mikrowellen-Leistung oder der Spannung oder des Stromes verbunden, deren Steuerungsausgang mit dem Eingang des umstimmbaren Mikrowellen-Generators (1) verbunden ist.

2. Kontaktloses Mikrowellen-Messgerät nach dem Anspruch 1 **dadurch gekennzeichnet, dass** zwischen dem Mikrowellen-Generator (1) und dem Eingang (31) des Richtungsviertor-Elements (3) der erste mit der Schaltrichtung zum Richtungsviertor-Element (3) ausgerichtete Isolator (9) geschaltet ist und/oder zwischen dem Isolierausgang (34) des Richtungsviertor-Elements (3) und dem Eingang der Steuerungs- und Bewertungseinheit (13) der zweite mit der Schaltrichtung zur Steuerungs- und Bewertungseinheit (13) ausgerichtete Isolator (10) geschaltet ist.

3. Kontaktloses Mikrowellen-Messgerät nach dem Anspruch 1 oder 2 **dadurch gekennzeichnet, dass** der Abstandsensor (6) aus der Übertragungsleitung besteht, in der eine Diskontinuität mit der großen Reflektion verschiebbar angebracht ist, die mit der reflektierenden Oberfläche (8) verbunden ist oder aus dieser reflektierenden Oberfläche (8) unmittelbar besteht.

4. Kontaktloses Mikrowellen-Messgerät nach dem Anspruch 1 und jedwedem der Ansprüche 3 bis 6 **dadurch gekennzeichnet, dass** der Abschwächer (4) einstellbar ist.

5. Kontaktloses Mikrowellen-Messgerät des Abstandes einer Reflektionsoberfläche, das einen umstimmbaren Mikrowellen-Generator (1) enthält, **dadurch gekennzeichnet, dass** sein Mikrowellen-Ausgang an den Eingang (31) des Richtungsviertor-Elements (3) angeschlossen ist, dessen Durchführungsausgang (32) an den Eingang des Abstandsensors (6) angeschlossen ist, der gleichzeitig sein Ausgang ist, und dessen Koppelausgang (33) an den Eingang des Abschwächers (4) angeschlossen ist, dessen Ausgang an den Kurzschluss (5) angeschlossen ist, und dessen Isolierausgang (34) mit dem Eingang der Steuerungs- und Bewertungseinheit (13) mit der Anzeige der Mikrowellen-Leistung oder der Spannung oder des Stromes verbunden ist, deren Steuerungsausgang mit dem Eingang des umstimmbaren Mikrowellen-Generators (1) verbunden ist.

6. Kontaktloses Mikrowellen-Messgerät nach dem Anspruch 5 **dadurch gekennzeichnet, dass** zwischen dem Mikrowellen-Generator (1) und dem Eingang (31) des Richtungsviertor-Elements (3) der erste mit der Schaltrichtung zum Richtungsviertor-Element (3) ausgerichtete Isolator (9) geschaltet ist und/oder zwischen dem Isolierausgang (34) des Richtungsviertor-Elements (3) und dem Eingang der Steuerungs- und Bewertungseinheit (13) der zweite mit der Schaltrichtung zur Steuerungs- und Bewertungseinheit (13) ausgerichtete Isolator (10) geschaltet ist.

7. Kontaktloses Mikrowellen-Messgerät nach dem Anspruch 5 oder 6 **dadurch gekennzeichnet, dass** der Abstandsensor (6) aus der Übertragungsleitung besteht, in der eine Diskontinuität mit der großen Reflektion verschiebbar angebracht ist, die mit der reflektierenden Oberfläche (8) verbunden ist oder aus dieser reflektierenden Oberfläche (8) unmittelbar besteht.

8. Kontaktloses Mikrowellen-Messgerät nach dem Anspruch 5 und jedwedem der Ansprüche 6 bis 7 **dadurch gekennzeichnet, dass** der Abschwächer (4) einstellbar ist.

## Revendications

1. Le système de mesure micro-ondes sans contact pour mesurer la distance de surface réfléchissante contenant un générateur de micro-ondes accordable (1), **dont la caractéristique essentielle est que** sa sortie de micro-ondes est reliée à l'entrée (31) de l'élément directionnel à quatre orifices (3), dont la sortie en enfilade (32) est reliée à l'entrée de l'atténuateur (4), dont la sortie est reliée à un élément à court-circuit (5), la sortie de couplage (33) de l'élément directionnel à quatre orifices (3) est reliée à l'entrée du capteur (6) de distance, qui est également sa sortie, et la sortie d'isolation (34) de l'élément directionnel à quatre orifices (3) est reliée à l'entrée de l'unité de commande et d'évaluation (13) équipée d'un indicateur de puissance de micro-ondes ou de tension ou de courant, dont la sortie de commande est reliée à l'entrée du générateur de micro-ondes accordable (1).

2. Le système de mesure micro-ondes sans contact selon la revendication 1 **dont la caractéristique essentielle est qu**'entre le générateur de micro-ondes (1) et l'entrée (31) de l'élément directionnel à quatre orifices (3) il est connecté le premier isolateur (9) orienté par la direction de transmission vers l'élément directionnel à quatre orifices (3) et/ou entre la sorite d'isolation (34) de l'élément directionnel à quatre orifices (3) et l'entrée de l'unité de commande et d'évaluation (13) il est connecté le deuxième isolateur (10) orienté par la direction de transmission vers l'unité de commande et d'évaluation (13).

3. Le système de mesure micro-ondes sans contact selon les revendications 1 ou 2 **dont la caractéristique essentielle est que** le capteur (6) de distance est formé par une ligne de transmission, dans laquelle il est situé une discontinuité déplaçable à haute réflexion reliée à la surface réfléchissante (8) ou elle est directement formée par cette surface réfléchissante (8).

4. Le système de mesure micro-ondes sans contact selon la revendication 1 et selon n'importe quelle revendication des 3 à 6 **dont la caractéristique essentielle est que** l'atténuateur (4) est ajustable.

5. Le système de mesure micro-ondes sans contact pour mesurer la distance de surface réfléchissante contenant un générateur de micro-ondes accordable (1), **dont la caractéristique essentielle est que** sa sortie de micro-ondes est reliée à l'entrée (31) de l'élément directionnel à quatre orifices (3), dont la sortie en enfilade (32) est reliée à l'entrée du capteur (6) de distance, qui est également sa sortie, est dont la sortie de couplage (33) est reliée à l'entrée de l'atténuateur (4), dont la sortie est reliée à l'élément à court-circuit (5), et dont la sortie d'isolation (34) est reliée à l'entrée de l'unité de commande et d'évaluation (13) équipée d'un indicateur de puissance de micro-ondes ou de tension ou de courant, dont la sortie de commande est reliée à l'entrée du générateur de micro-ondes accordable (1).

6. Le système de mesure micro-ondes sans contact selon la revendication 5 **dont la caractéristique essentielle est qu**'entre le générateur de micro-ondes (1) et l'entrée (31) de l'élément directionnel à quatre orifices (3) il est connecté le premier isolateur (9) orienté par la direction de transmission vers l'élément directionnel à quatre orifices (3) et/ou entre la sorite d'isolation (34) de l'élément directionnel à quatre orifices (3) et l'entrée de l'unité de commande et d'évaluation (13) il est connecté le deuxième isolateur (10) orienté par la direction de transmission vers l'unité de commande et d'évaluation (13).

7. Le système de mesure micro-ondes sans contact selon les revendications 5 ou 6 **dont la caractéristique essentielle est que** le capteur (6) de distance est formé par une ligne de transmission, dans laquelle il est situé une discontinuité déplaçable à haute réflexion reliée à la surface réfléchissante (8) ou elle est directement formée par cette surface réfléchissante (8).

8. Le système de mesure micro-ondes sans contact selon la revendication 5 et selon n'importe quelle revendication des 6 à 7 **dont la caractéristique essentielle est que** l'atténuateur (4) est ajustable.
